# EUROPÄISCHE PATENTANMELDUNG

(11) **EP 2 003 017 A2**
(43) Veröffentlichungstag der Anmeldung: **17.12.2008**
(21) Anmeldenummer: 08009868.4
(22) Anmeldetag: 30.05.2008
(51) Int. Cl.: B60N 2/56

(54) **Fahrzeugsitz mit einer Klimatisierungseinrichtung**

(30) Priorität: 14.06.2007 DE 202007008310 U
(71) Anmelder: Brose Fahrzeugteile GmbH & Co. Kommanditgesellschaft Coburg, 96450 Coburg (DE)
(72) Erfinder: Macht, Alwin, 96250 Ebensfeld (DE); Stegner, Daniela, 96465 Neustadt (DE); Brosius, Steffen, 96479 Weitramsdorf (DE)
(74) Vertreter: Tergau, Dietrich

(57) **Zusammenfassung**

Der Fahrzeugsitz weist eine der Sitzwanne (1) und / oder der Rückenlehne zugeordnete Klimatisierungseinrichtung (26) auf. Die Klimatisierungseinrichtung (26) umfasst einen Lüfter (11), einen Strömungskanal (5) und ein an der Oberseite der Sitzwannen- und / oder Rückenlehnenpolsterung (28) angeordnetes und über den Strömungskanal (5) mit dem Lüfter (11) verbundenes Luftverteilerelement (29). In die Sitzwanne (1) und / oder in die Rückenlehne sind eine Lüfteraufnahme (4) und der Strömungskanal (5) eingeformt.

## Beschreibung

Die Erfindung bezieht sich auf einen Fahrzeugsitz mit einer der Sitzwanne und/oder der Rückenlehne zugeordneten Klimatisierungseinrichtung. Die Klimatisierungseinrichtung umfasst einen Lüfter, einen Strömungskanal und ein an der Oberseite der Sitzwannen- und/oder der Rückenlehnenpolsterung angeordnetes und über den Strömungskanal mit dem Lüfter verbundenes Luftverteilerelement.

Eine derartige Klimatisierungseinrichtung für einen Fahrzeugsitz ist aus der DE 103 16 275 A1 bekannt. Die Sitzwanne und die Rückenlehne des Fahrzeugsitzes sind schalenartig geformt. Die Sitzwanne ist zur Aufnahme der Sitzwannenpolsterung und die Rückenlehne ist zur Aufnahme der Rückenlehnenpolsterung ausgebildet. Die Sitzwannen- und die Rückenlehnenpolsterung weisen an ihrer Oberseite eine Mehrzahl miteinander verbundener, in die Polsterung eingearbeiteter Strömungskanäle auf. Dabei gehen die Strömungskanäle der Sitzwannenpolsterung und die Strömungskanäle der Rückenlehnenpolsterung ineinander über. Die Strömungskanäle von Sitzwannenpolsterung und Rückenlehnenpolsterung werden mit als Luftverteilermatten ausgebildeten Luftverteilerelementen abgedeckt. Eine derartige Luftverteilermatte ist beispielsweise in der DE 203 203 72 U1 beschrieben. Die Luftverteilermatten sind mittels eines luftdurchlässigen Polsterbezugs an der Sitzwannenpolsterung oder an der Rückenlehnenpolsterung fixiert. An der Rückenlehne ist seitlich ein Axiallüfter angeordnet, über den die Strömungskanäle der Polsterung mit Förderluft beaufschlagbar sind. Insgesamt werden somit der Rücken, das Gesäß und die Oberschenkel einer auf dem Kraftfahrzeugsitz sitzenden Person mit einem Förderluftstrom beaufschlagt. Mittels der Luftverteilermatten erfolgt eine gleichmäßige Verteilung der Förderluft über die gesamte Oberfläche der Polsterung von Sitzwanne und Rückenlehne. In der DE 103 50 191 A1 ist eine Klimatisierungseinrichtung für einen Fahrzeugsitz beschrieben, bei der sowohl die Luftmenge, als auch die Lufttemperatur des Förderluftstroms vorgebbar sind.

Der Erfindung liegt die Aufgabe zugrunde, das Konzept der Klimatisierung eines Fahrzeugsitzes konstruktiv zu verbessern. Diese Aufgabe ist durch die Merkmalskombination des Anspruchs 1 in erfinderischer Weise gelöst. Die Unteransprüche beinhalten teilweise zweckmäßige und teilweise für sich selbst erfinderische Weiterbildungen der im Anspruch 1 beanspruchten Erfindung.

Hierzu sind in die Sitzwanne und/oder in die Rückenlehne eine Lüfteraufnahme und zumindest ein Strömungskanal eingeformt. Auf diese Weise ist ein nachträgliches Einbringen der Lüfteraufnahme in die schalenartig ausgebildete Sitzwanne und/oder Rückenlehne für das Anbringen des Lüfters überflüssig. Weiterhin entfällt das aufwändige Einbringen der Strömungskanäle in die Oberfläche der Sitzwannen- und/oder Rückenlehnenpolsterung. Vielmehr kann die Sitzwanne und/oder die Rückenlehne mit einer herkömmlichen Polsterung ausgestattet sein. Die Klimatisierungseinrichtung ist daher gegenüber einer Klimatisierungseinrichtung nach dem Stand der Technik bedeutend kostengünstiger ausführbar.

In einer zweckmäßigen Weiterbildung bildet die Lüfteraufnahme ein Gehäuse für ein dem Lüfter zugeordnetes Lüfterrad. Auf diese Weise lassen sich die Kosten für das Gehäuse des Lüfters vollständig einsparen. Weiterhin entfällt ein Fertigungsschritt, da das Lüfterrad nunmehr direkt in die Lüfteraufnahme eingesetzt wird. Ein Einsetzen des Lüfterrades in ein entsprechendes Gehäuse und ein anschließendes Montieren des Lüfters mit seinem Gehäuse auf die Lüfteraufnahme ist nicht mehr notwendig.

In einer zweckmäßigen Weiterbildung ist der Lüfter als Radiallüfter ausgeführt. Bei einem derartigen Radiallüfter folgt im blasenden Betrieb eine Zufuhr der zu fördernden Luft von der Mittelachse des Lüfterrades her. Die Förderluft wird zu den Schaufeln des Lüfterrades geleitet und - wie der Name Radiallüfter ausdrückt - in bezogen auf die Drehachse des Lüfterrades radialer Richtung über einen Lüfterauslass aus dem Gehäuse des Lüfters ausgeblasen. Ein derartiger Radiallüfter benötigt weniger Bauraum als ein dieselbe Luftmenge fördernder Axiallüfter. Durch die 90°-Umlenkung der Förderluft lässt sich ein sich an der Oberfläche der schalenartigen Sitzwanne und/oder Rückenlehne erstreckender Strömungskanal mit der Förderluft beaufschlagen. Somit kann der Strömungskanal in einfacher Weise an der zum Polster weisenden Innenseite der Sitzwanne und/oder der Rückenlehne eingeformt sein. Insbesondere lässt sich der Strömungskanal an der zur Polsterung gewandten Seite der Sitzwanne und/oder der Rückenlehne bis zu deren Rand führen, der im wesentlichen mit der Oberseite der Sitzwannen- oder Rückenlehnenpolsterung abschließt.

Prinzipiell ist der Radiallüfter auch im saugenden Betrieb einsetzbar. Mit anderen Worten wird die Förderluft von der Oberfläche der Sitzwannen - und / oder Rückenlehnenpolsterung zum Lüfter hin abgesaugt. Fortan ist der Einfachheit halber nur noch von einem blasenden Betrieb des Lüfters die Rede. Ausdrücklich ist der Lüfter jedoch auch im saugenden Betrieb einsetzbar.

Vorteilhaft ist insbesondere am Rand der Sitzwanne und/oder der Rückenlehne ein Strömungsumlenker als Verbindung zwischen dem Strömungskanal und dem Luftverteilerelement vorgesehen. Auf diese Weise lässt sich das flächig im wesentlichen an der Oberseite der Polsterung angeordnete Luftverteilerelement gleichmäßig von einer Seite her mit Förderluft beaufschlagen.

Das Luftverteilerelement ist vorteilhaft als profiliertes Polster oder als Luftverteilermatte ausgeführt. Das Polster kann in einfacher Weise mit einer derart profilierten Oberfläche versehen werden. Durch den Polsterbezug sind somit an der Oberfläche der Polsterung in einfacher Weise Strömungskanäle gebildet, die die Förderluft an der Oberfläche der Polsterung verteilen.

Eine beispielsweise gemäß der bereits angeführten DE 203 20 327 U1 ausgebildete Luftverteilermatte hingegen stellt ein in einem zusätzlichen Fertigungsschritt anzubringendes Element dar, ermöglicht jedoch eine sehr gleichmäßige Verteilung der Förderluft über die Oberfläche der Polsterung.

Wird eine derartige Luftverteilermatte über den Rand der Sitzwanne oder der Rückenlehne mittels des bereits beschriebenen Strömungsumlenkers mit Förderluft beaufschlagt, so lässt sich eine besonders gleichmäßige Verteilung der Förderluft bereits vom Rand der Oberfläche der Polsterung aus erreichen.

In einer vorteilhaften Weiterbildung weist der Strömungskanal Auflagekonturen zur Polsterung hin auf und ist zur Polsterung hin offen ausgeführt. Mit anderen Worten ist der Strömungskanal erst durch die in die Sitzwanne und/oder in die Rückenlehne eingebrachte Polsterung abgeschlossen und vervollständigt. Durch die Bereitstellung von Auflagekonturen lässt sich beeinflussen, wie weit die Polsterung durch das Körpergewicht einer auf dem Fahrzeugsitz sitzenden Person eingedrückt wird und wie weit sich somit der Strömungsquerschnitt des Strömungskanals verringert. Durch eine geeignete Abstützung der Polsterung ist somit erreichbar, dass auch bei einer Person mit einem hohen Körpergewicht ein hinreichender Strömungsquerschnitt für die Anströmung des Luftverteilerelements erhalten bleibt. Weiterhin lässt sich die Sitzwanne bzw. die Rückenlehne einteilig ohne Hinterschnitte und somit in einfacher Weise entformbar herstellen. So ist die einfache Fertigung der Sitzwanne bzw. Rückenlehne als Kunststoffspritzteil möglich. Zur Festigung der Struktur von Sitzwanne bzw. Rückenlehne kann der Kunststoff glasfaserverstärkt ausgeführt sein. Durch diese einteilige Ausführung und die vergleichsweise einfache Bauteilgeometrie ist die Klimatisierungseinrichtung in einfacher und kostengünstiger Weise in den Fahrzeugsitz integrierbar.

In einer vorteilhaften Variante ist dem Strömungskanal ein Peltierelement zum Heizen oder Kühlen der Anströmluft zugeordnet. Ein derartiges Peltierelement weist p- und n-dotierte Halbleiterquader auf, die abwechselnd an ihrer Oberseite und an ihrer Unterseite über Metallbrücken miteinander elektrisch leitend verbunden sind. Die Metallbrücken bilden zugleich thermische Kontaktflächen und sind durch eine Abschlussplatte, insbesondere aus einer Folie oder aus einer Keramik, isoliert. Fließt ein Strom durch das Peltierelement, so kühlen sich je nach Stromrichtung die oberen Metallbrücken ab und die unteren heizen sich auf, oder umgekehrt. Damit wird immer eine der beiden Abschlussplatten aufgeheizt und die andere dementsprechend abgekühlt. Über die elektrische Leistungsaufnahme des Peltierelements lässt sich der Temperaturunterschied zwischen den beiden Abschlussplatten vorgeben. Ein derartiges Peltierelement ist z.B. der DE 199 08 967 B4 zu entnehmen. Da ein derartiges Peltierelement keine bewegten Bauteile umfasst, erlaubt es ein verschleißfreies Heizen oder Kühlen des Luftstromes. Hierzu ist eine der beiden Abschlussplatten insbesondere einer Wandung des Strömungskanals zugeordnet, während die zweite Abschlussplatte außerhalb des Strömungskanals liegt. Das Heizen oder Kühlen des Luftstroms erfolgt über Konvektion, indem der Luftstrom die geheizte oder die gekühlte Abschlussplatte des Peltierelements überstreicht.

In einer zweckmäßigen Weiterbildung bildet die erste Abschlussplatte des Peltierelements eine Wandung des Strömungskanals. Weiterhin bildet die zweite Abschlussplatte des Peltierelements eine Wandung eines zweiten, mit dem Lüfter verbundenen Strömungskanals. Mit anderen Worten werden vom Lüfter beide Abschlussplatten des Peltierelements mit Förderluft beaufschlagt. Mittels Konvektion wird jeweils die durch einen der beiden Kanäle strömende und über die Oberfläche der beiden Abschlussplatten streichende Luft erhitzt und die durch den jeweils anderen Kanal strömende Luft gekühlt. Auf diese Weise ist gewährleistet, dass es am Peltierelements nicht zu einem Hitzestau und einem daraus resultierenden womöglichen Versagen des Peltierelements kommt. Soll die Oberfläche der Polsterung geheizt werden, entspricht die vom Peltierelement mittels des Förderluftstroms abgeführte Wärme zugleich der Nutzwärme. Soll andererseits die Oberfläche der Polsterung gekühlt werden, wird die vom Peltierelement produzierte Wärme vom zweiten Strömungskanal abgeführt.

Weiterhin ist noch zu beachten, dass bei der Auslegung des zweiten Kanals der Strömungswiderstand in etwa dem Strömungswiderstand des ersten Strömungskanals mit der nachgeschalteten Luftverteilermatte entsprechen muss. Nur so ist gewährleistet, dass die vom Peltierelement produzierte Wärme in jedem Fall sicher abgeführt ist.

In einer zweckmäßigen Weiterbildung weisen die Abschlussplatten an ihren den Strömungskanälen zugewandten Seiten Kühlrippen auf. Auf diese Weise lässt sich eine Verbesserung des Wärmeübergangs durch Konvektion zwischen der jeweiligen Abschlussplatte und dem sie bestreichenden Luftstrom erreichen. Die Kühlrippen des dem Polster zugewandten Strömungskanals lassen sich weiterhin so ausführen, dass sie eine Auflagefläche für die Polsterung bereitstellen. Somit erfüllen die Kühlrippen im Bereich des Peltierelements zusätzlich die Funktion von Auflagekonturen für die Polsterung.

Zweckmäßig weist die Sitzwanne und/oder die Rückenlehne eine Einformung als Aufnahmekontur für das Peltierelement auf. Diese kann z.B. vorsprungartig ausgeführt sein, so dass sich das Peltierelement mit einer seiner beiden Abschlussplatten an die Aufnahmekontur ankleben lässt.

In einer vorteilhaften Weiterbildung ist der zweite Strömungskanal in die Sitzwanne und/oder in die Rückenlehne eingeformt. Die den zweiten Strömungskanal abschließende Wandung ist dabei durch einen Gehäusedeckel gebildet. Auf diese Weise lässt sich die Sitzwanne und / oder die Rückenlehne wie die zuvor beschriebene Variante ohne Peltierelement als einstückiges und integrales Bauteil fertigen. Die vollständige Ausbildung der beiden Strömungskanäle ist durch den ebenfalls als einstückiges Bauteil ausführbaren Gehäusedeckel gewährleistet. Dabei kann der Gehäusedeckel beispielsweise derart gefertigt sein, dass er sich nach Art einer Schnappverbindung auf die Sitzwanne und / oder die Rückenlehne aufdrücken lässt.

Nachfolgend werden zwei Ausführungsbeispiele der Erfindung anhand einer Zeichnung näher beschrieben. Darin zeigen:
- Fig. 1 und Fig. 2: eine erste Sitzwanne von ihrer eine Polsterung aufnehmenden Oberseite her gesehen,
- Fig. 3: die Sitzwanne aus Fig. 1 und 2 von ihrer Unterseite her gesehen mit einem Radiallüfter,
- Fig. 4: eine zweite Sitzwanne von ihr eine Sitzpolsterung aufnehmenden Seite her gesehen mit zwei Peltierelementen,
- Fig. 5: die Sitzwanne aus Fig. 4 von ihrer Unterseite her gesehen mit einem Radiallüfter,
- Fig. 6: einen Gehäusedeckel,

- Fig. 7: die Sitzwanne aus Fig. 5 mit montiertem Gehäusedeckel, sowie
- Fig. 8: eine Klimatisierungseinrichtung mit der Sitzwanne aus Fig. 7 in einer mittig geschnittenen Seitenansicht.

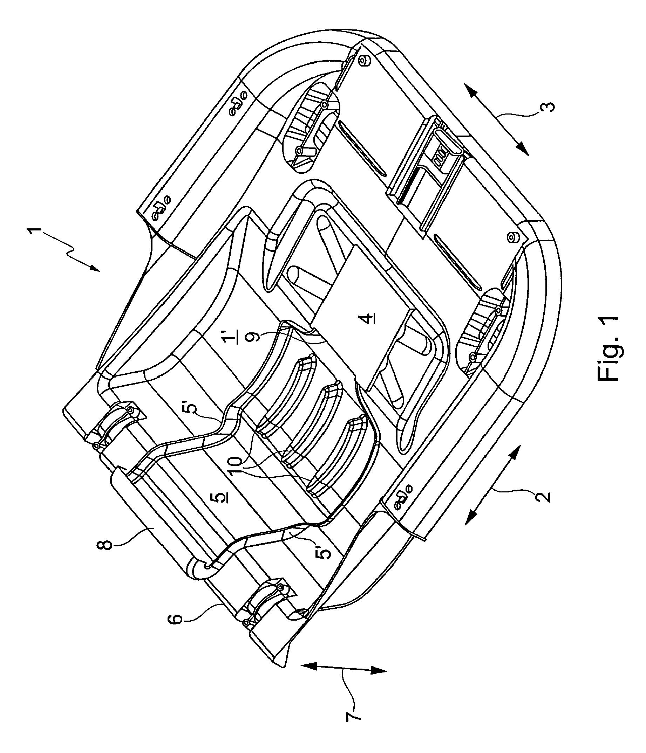

Fig. 1 zeigt eine erste Sitzwanne 1 eines in den Figuren nicht dargestellten Kraftfahrzeugsitzes. Die Sitzwanne 1 ist wannenartig zur Aufnahme einer in dieser und in folgenden Figuren nicht dargestellten Sitzwannenpolsterung ausgeführt. Sie ist einteilig als glasfaserverstärktes Kunststoffspritzteil gefertigt. Die Sitzwanne 1 weist von ihrer im Montageendzustand der Kraftfahrzeuglängsrichtung entsprechenden Längsrichtung 2 und der Querrichtung 3 her mittig gesehen eine plattenförmig ausgeführte Lüfteraufnahme 4 auf. Von der Lüfteraufnahme 4 aus sind zwei in Längsrichtung 2 verlaufende und sich von der Oberfläche 1' der Sitzwanne abhebende Kanalwände 5' zur Bildung eines Strömungskanals 5 eingeformt. Die Kanalwände 5' und damit der Strömungskanal 5 erstrecken sich bis zum Sitzwannenrand 6. Wie Figur 1 zu entnehmen ist, verläuft der Strömungskanal 5 von der Lüfteraufnahme 4 aus zunächst im wesentlichen in Längsrichtung 2 und anschließend in vertikaler Richtung 7.
   An den Sitzwannenrand 6 schließt sich im Montageendzustand des Kraftfahrzeugsitzes in vertikaler Richtung 7 eine ebenfalls wannenartig ausgebildete und in den Figuren nicht dargestellte Rückenlehne an. Am Sitzwannenrand 6 endet der Strömungskanal 5 in einem angeformten Strömungsumlenker 8. Das Ende des Strömungsumlenkers 8 als Ende des Strömungskanals 5 ist im wesentlichen in der Längsrichtung 2 ausgerichtet.

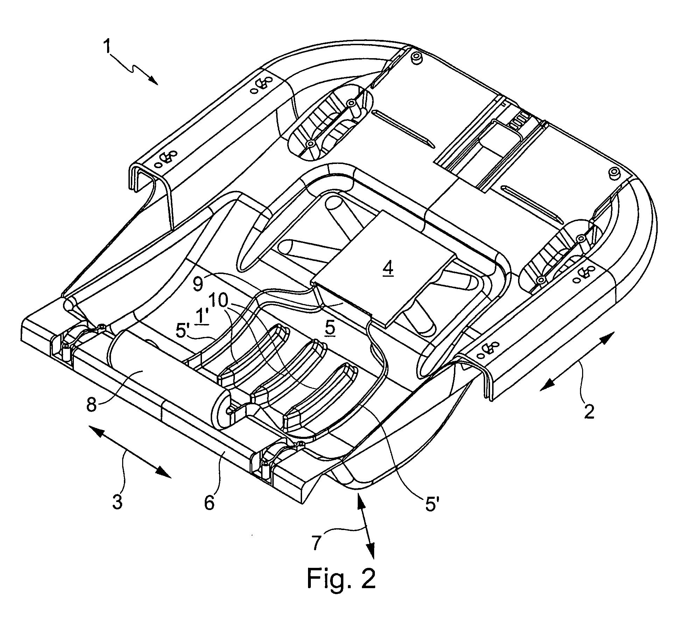

Fig. 2 verdeutlicht, dass die Lüfteraufnahme 4 gegenüber der Struktur der Sitzwanne 1 plattenartig ausgebildet ist und einen Lüfterauslass 9 bereitstellt, der im wesentlichen die Oberseite 1' und die Unterseite 1" der Sitzwanne 1 miteinander verbindet. Weiterhin sind im Strömungskanal 5 drei als Polsterabstützrippen ausgeführte und sich von der Oberseite 1' der Sitzwanne 1 in vertikaler Richtung 7 abhebende Auflagekonturen 10 in Längsrichtung 2 eingeformt.

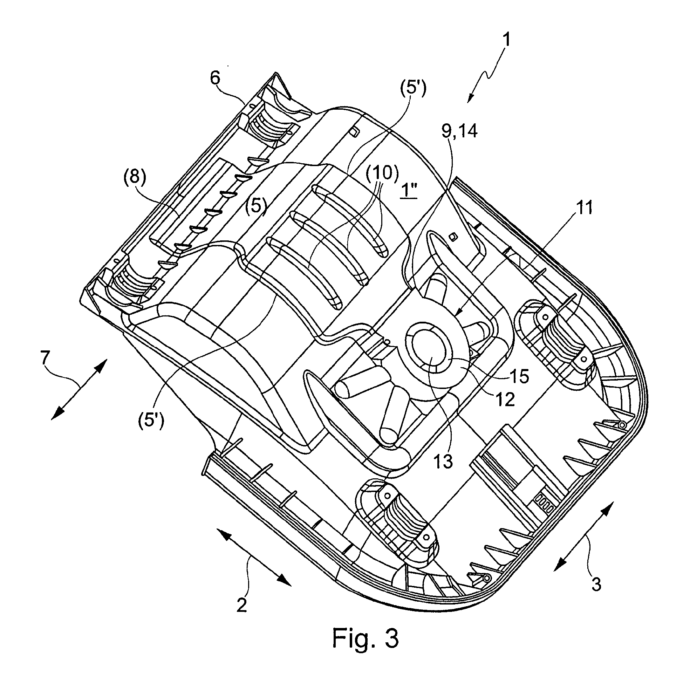

Fig. 3 zeigt die Sitzwanne aus den Fig. 1 und 2 von ihrer Unterseite 1" her gesehen. Einformungen, die an der Oberfläche 1' der Sitzwanne als Erhebungen ausgebildet sind, sind hier als Eintiefungen zu sehen. Der besseren Übersicht halber sind die entsprechenden Bezugszeichen in Klammern gesetzt. An der Lüfteraufnahme 4 der Sitzwanne 1 ist von ihrer Unterseite 1" her gesehen ein Radiallüfter 11 befestigt. Der Radiallüfter 11 weist ein Gehäuse 12 auf, in dem ein Lüfterrad 13 drehbar gelagert ist. Der Radiallüfter 11 ist über einen Lüfterauslass 14 mit der Auslassöffnung 9 der Sitzwanne 1 verbunden. Weiterhin weist er einen Lüftereinlass 15 zur Zufuhr oder Abfuhr von Förderluft auf. Dabei bezieht sich die Terminologie von Lüfterauslass 14 und Lüftereinlass 15 auf einen blasenden Betrieb des Radiallüfters 11. Der Radiallüfter 11 ist jedoch auch im saugenden Betrieb einsetzbar. Dabei kehren sich Lüfterauslass 14 und Lüftereinlass 15 um. Fortan ist jedoch grundsätzlich von einem blasenden Betrieb des Radiallüfters 11 die Rede.

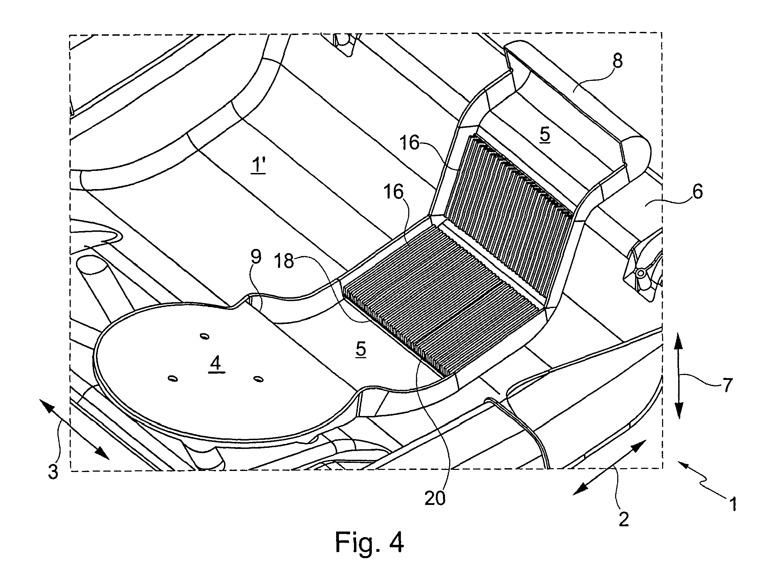

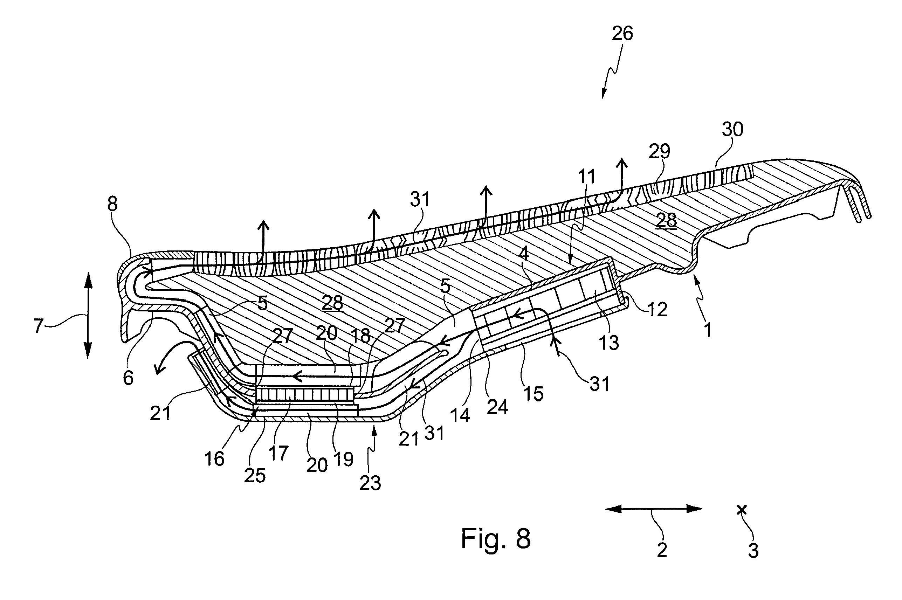

Fig. 4 zeigt einen Ausschnitt einer zweite Sitzwanne 1, die im wesentlichen der Sitzwanne aus den Fig. 1 bis 3 entspricht, von der die Sitzpolsterung aufnehmenden Oberseite 1' her gesehen. Im Strömungskanal 5 sind zwei Peltierelemente 16 angeordnet. Der Aufbau eines derartigen Peltierelements 16 geht insbesondere aus der Figur 8 hervor, in der der besseren Übersicht halber jedoch nur ein Peltierelement 16 eingezeichnet ist. Jedes Peltierelement 16 weist einen in der Figur 8 nur schematisch dargestellten n-p-Bereich 17 auf, bei dem in abwechselnder Folge n-dotierte und p-dotierte Halbleiterquader über Metallbrücken miteinander leitend verbunden sind. Oberhalb und unterhalb des n-p-Bereiches sind eine obere und eine untere Abschlussplatte 18,19 angeordnet. An den beiden Abschlussplatten 18,19 wiederum sind in Längsrichtung 2 angeordnete Kühlrippen 20 befestigt. In der Fig. 4 sind lediglich die oberen Abschlussplatten 18 der beiden Peltierelemente 16 sowie die daran angeordneten Kühlrippen 20 zu erkennen. Mit anderen Worten sind die beiden Peltierelemente 16 so an der Sitzwanne 1 befestigt, dass lediglich die obere Abschlussplatte 18 mit den daran angeordneten Kühlrippen 20 in den Strömungskanal 5 ragt. Die beiden Peltierelemente 16 bilden damit einen Teil einer Wandung des Strömungskanals 5. Auflagekonturen für die Sitzwannenpolsterung sind bei der zweiten Variante der Sitzwanne 1 nicht vorgesehen.

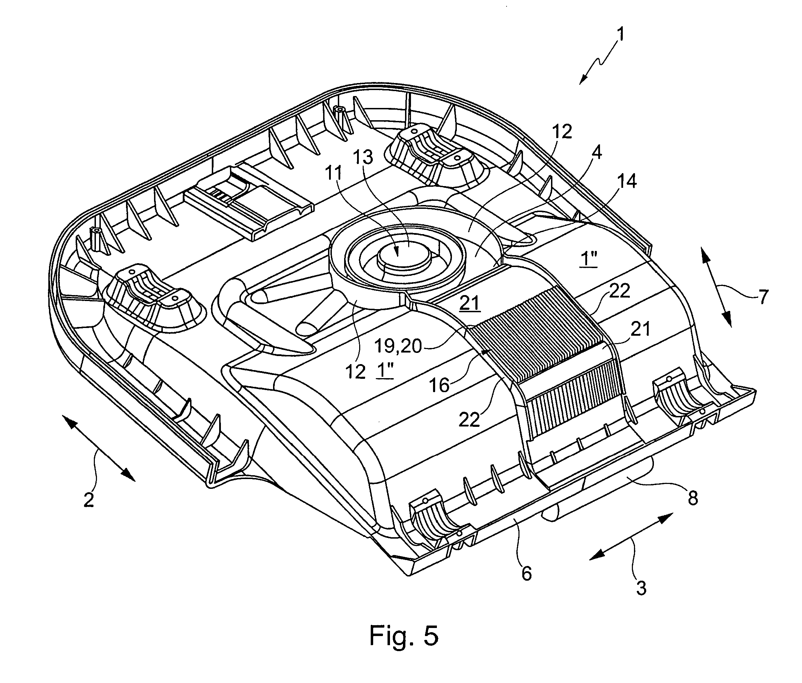

Fig. 5 zeigt die Sitzwanne 1 aus Fig. 4 von ihrer Unterseite 1" her gesehen. An der Unterseite 1" der Sitzwanne 1 ist ein von der Lüfteraufnahme 4 aus zum Sitzwannenrand 6 führender zweiter Strömungskanal 21 durch zwei in die Sitzwanne 1 eingeformte Kanalwände 22 ausgebildet. Die beiden Peltierelemente 16 bilden mit ihren unteren Abschlussplatten 19 und den daran angeordneten Kühlrippen 20 einen Teil einer Wandung des zweiten Strömungskanals 21. Zur Mitte der Sitzwanne 1 gesehen münden die beiden Kanalränder 22 in die Lüfteraufnahme 4. Die Gehäusewände 12' des Gehäuses 12 des Radiallüfters 11 sind durch Einformungen in der Sitzwanne 1 gebildet. In der Mitte der Luftaufnahme 4 ist ein Lüfterrad 13 drehbar gelagert. Der Lüfterauslass 14 und die Auslassöffnung 9 entsprechen sich in diesem Fall, über sie sind beide Strömungskanäle 5,21 mit dem Radiallüfter 11 verbunden. Dies ist wiederum der Figur 8 zu entnehmen.

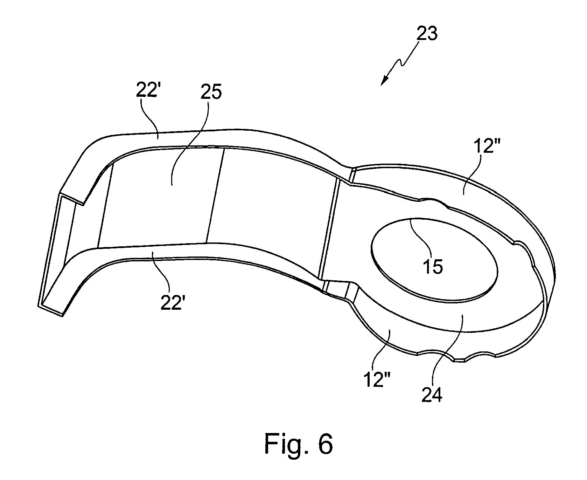

Fig. 6 zeigt einen Gehäusedeckel 23, der auf die Lüfteraufnahme 4 und den zweiten Strömungskanal 21 aufsetzbar ist. Der Gehäusedeckel 23 weist einen lochkreisartigen Gehäuseabschnitt 24 und einen streifenartigen Strömungskanalabschnitt 25 auf. Weiterhin weist der Gehäuseabschnitt 24 Gehäusewände 12' und der Strömungskanalabschnitt 25 weist Kanalwände 22' auf. Der lochkreisartige Mittelbereich des Gehäuseabschnitts 24 ist als Lüftereinlass 15 ausgebildet.

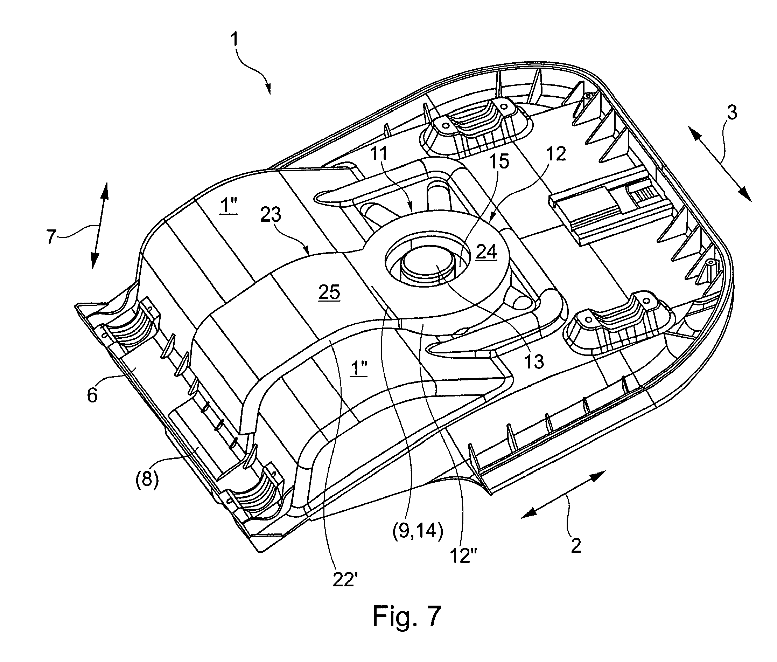

Fig. 7 zeigt den Gehäusedeckel 23 im montierten Zustand. Dazu wird der Gehäusedeckel 23 von unten mit seinem Gehäuseabschnitt 24 und seinen Gehäusewänden 12" auf die die Lüfteraufnahme 4 umgebenden Gehäusewände 12' aufgesetzt. Weiterhin wird der Strömungskanalabschnitt 25 mit seinen Kanalwänden 22' auf die Kanalwände 22 des Strömungskanals 21 aufgesetzt. Somit ist aus der Lüfteraufnahme 4 mit der ihn umgebenden Gehäusewandung 12' und dem Gehäuseabschnitt 24 mit den Gehäusewandungen 12" das Gehäuse 12 des Radiallüfters 11 gebildet. Der Strömungskanalabschnitt 25 schließt mit seinen Kanalwänden 22' den zweiten Strömungskanal 21 ab.
Fig. 8 zeigt eine Klimatisierungseinrichtung 26 im Montageendzustand mit der Sitzwanne 1 aus den Fig. 5 und 7 in einer in Längsrichtung 2 geschnittenen Seitenansicht. Der Einfachheit halber ist in der Fig. 1 eines der beiden Peltierelemente 16 weggelassen. Das Peltierelement 16 ist in einer als Ausnehmung ausgebildeten Aufnahmekontur in der Sitzwanne 1 angeordnet, und zwar derart, dass seine obere Abschlussplatte 18 eine Wandung des ersten Strömungskanals 5 und seine untere Abschlussplatte 19 eine Wandung des zweiten Strömungskanals 21 bilden. In der Sitzwanne 1 ist eine Sitzwannenpolsterung 28 befestigt. Die Sitzwannenpolsterung 28 schließt den ersten Strömungskanal 5 nach oben ab. Dazu liegt sie am Kanalrand 7 des Strömungskanals auf. Die Kühlrippen 20 der oberen Abschlussplatte 18 stützen die Polsterung zusätzlich ab. Die Sitzwannenpolsterung 28 besteht aus einem im wesentlichen luftdichten Schaummaterial. An der Oberseite der Sitzwannenpolsterung 28 ist eine Luftverteilermatte 29 angeordnet. Diese schließt sich im Bereich des Sitzwannenrandes 6 nahezu nahtlos an das Ende des durch den Strömungsumlenker 8 gebildeten Endes des ersten Strömungskanals 5 an. Oberhalb der Luftverteilermatte 29 ist ein luftdurchlässiger Polsterbezug 30 befestigt, der die Luftverteilermatte 29 in ihrer Position fixiert.

Nachfolgend ist die Funktion der Klimatisierungseinrichtung 26 beschrieben. In der Fig. 8 ist die Strömungsrichtung 31 für den Radiallüfter 11 im blasenden Betrieb eingezeichnet. Mittels seines rotierenden Lüfterrades 13 saugt der Radiallüfter 11 Förderluft durch seinen Lüftereinlass 15 ein. Die Förderluft wird radial zu den Enden des Lüfterrades 13 bewegt. Hierdurch wird der Lüfterauslass 9,14 mit der Förderluft beaufschlagt. Beide Strömungskanäle 5,21 werden mit der Förderluft beaufschlagt. Die Förderluft teilt sich auf die beiden Strömungskanäle 5,21 auf. Ein erster Teilstrom der Förderluft strömt durch den ersten Strömungskanal 5 und überstreicht die obere Abschlussplatte 18 und die Kühlrippen 20 des Peltierelements 16. Das Peltierelement 16 ist mit einer Versorgungsspannung beaufschlagt derart, dass entweder die obere Abschlussplatte 18 geheizt und die untere Abschlussplatte 19 gekühlt wird, oder umgekehrt. Mit anderen Worten wird der über die Kühlrippen 20 strömende Luftstrom entweder durch Konvektion aufgeheizt oder aber abgekühlt. Die Kühlrippen 20 verbessern hierbei den Wärmeübergang. Der Luftstrom gelangt über den ersten Strömungskanal 5 bis zum Strömungsumlenker 8 am Sitzwannenrand 6. Vom Strömungsumlenker 8 als Ende des ersten Strömungskanals 5 aus wird die Luftverteilermatte 28 seitlich angeströmt. Die Förderluft verteilt sich in Strömungsrichtung 31 flächig auf der Luftverteilermatte 29 und damit auf der Oberfläche des Kraftfahrzeugsitzes. Durch den luftdurchlässig ausgestalteten Polsterbezug 30 tritt die Förderluft an die Oberfläche des Kraftfahrzeugsitzes und kühlt bzw. wärmt das Gesäß und die Unterseiten der Oberschenkel einer auf dem Fahrzeugsitz sitzenden Person. Der durch den zweiten Strömungskanal 21 strömende Luftstrom wird über die untere Abschlussplatte 19 und ihre Kühlrippen 20 geleitet. Dabei wird der Luftstrom je nach Schaltzustand des Peltierelements 16 entweder aufgeheizt oder abgekühlt.

Der zweite Strömungskanal 21 ist vorgesehen, um einen Hitzestau im Bereich des Peltierelements 16 zu vermeiden. Weiterhin lässt sich der Wirkungsgrad es Peltierelements 16 durch eine Abfuhr der vom Peltierelement 16 erzeugten Wärme heraufsetzen. Wird die obere Abschlussplatte 18 des Peltierelements 16 geheizt, so sorgt das Aufheizen des Luftstroms zugleich für eine Abfuhr der Wärme vom Peltierelement 16. Wird hingegen die obere Abschlussplatte 18 gekühlt, so entsteht an der unteren Abschlussplatte 19 Wärme, die mittels des zweiten Strömungskanals 21 abgeführt wird. Bei der Auslegung der Strömungskanäle 5,21 ist darauf zu achten, dass beide Strömungskanäle 5,21 einen vergleichbaren Strömungswiderstand aufweisen, da ansonsten der Luftstrom durch einen der beiden Strömungskanäle 5,21 bedeutend höher wäre als durch den anderen. Das Resultat wäre eine starke Herabsetzung der Kühlleistung und damit des Wirkungsgrades des Peltierelements 16.

Der Radiallüfter 11 ist auch im saugenden Betrieb einsetzbar, d.h. die Strömungsrichtung 29 kehrt sich um und es wird ein Luftstrom von der Luftverteilermatte 27 ausgehend durch den Radiallüfter 11 angesaugt. In diesem Fall ist das Peltierelement 16 abgeschaltet.

Die in den Fig. 1 bis 3 gezeigte Sitzwanne 1 entspricht im Wesentlichen der in der Fig. 8 gezeigten Variante. Da jedoch bei dieser Sitzwanne kein Peltierelement 16 vorgesehen ist, wird die Luftverteilermatte 27 mit einer Förderluft mit Fahrzeuginnenraumtemperatur beaufschlagt.

### Bezugszeichenliste

- 1: Sitzwanne
- 1': Oberseite
- 1": Unterseite
- 2: Längsrichtung
- 3: Querrichtung
- 4: Lüfteraufnahme
- 5: Strömungskanal
- 5': Kanalwand
- 6: Sitzwannenrand
- 7: vertikale Richtung
- 8: Strömungsumlenker
- 9: Auslassöffnung
- 10: Auflagekontur
- 11: Radiallüfter
- 12: Gehäuse
- 12,12': Gehäusewand
- 13: Lüfterrad
- 14: Lüfterauslass
- 15: Lüftereinlass
- 16: Peltierelement
- 17: n-p-Bereich
- 18: obere Abschlussplatte
- 19: untere Abschlussplatte
- 20: Kühlrippe
- 21: zweiter Strömungskanal
- 22,22': Kanalwand
- 23: Gehäusedeckel
- 24: Gehäuseabschnitt
- 25: Strömungskanalabschnitt
- 26: Klimatisierungseinrichtung
- 27: Aufnahmekontur

- 28: Sitzwannenpolsterung
- 29: Luftverteilermatte
- 30: Polsterbezug
- 31: Strömungsrichtung

## Patentansprüche

1. Fahrzeugsitz mit einer der Sitzwanne (1) und / oder der Rückenlehne zugeordneten Klimatisierungseinrichtung (26), umfassend einen Lüfter (11), einen Strömungskanal (5) und ein an der Oberseite (1') von Sitzwannen- und / oder Rückenlehnenpolsterung (28) angeordnetes und über den Strömungskanal (5) mit dem Lüfter (11) verbundenes Luftverteilerelement (29),
**gekennzeichnet durch**
• eine in die Sitzwanne (1) und / oder in die Rückenlehne eingeformte Lüfteraufnahme (4) und
• einen in die Sitzwanne (1) und / oder die Rückenlehne eingeformten Strömungskanal (5).

2. Fahrzeugsitz nach Anspruch 1,
**dadurch gekennzeichnet,**
**dass** die Lüfteraufnahme (4) ein Gehäuse (12) für ein dem Lüfter (11) zugeordnetes Lüfterrad (13) bildet.

3. Fahrzeugsitz nach Anspruch 1 oder 2,
**dadurch gekennzeichnet,**
**dass** der Lüfter als Radiallüfter (11) ausgeführt ist.

4. Fahrzeugsitz nach einem der Ansprüche 1 bis 3,
**gekennzeichnet durch**
einen insbesondere am Rand (6) der Sitzwanne (1) und / oder der Rückenlehne angeordneten Strömungsumlenker (8) als Verbindung zwischen dem Strömungskanal (5) und dem Luftverteilerelement (29).

5. Fahrzeugsitz nach einem der Ansprüche 1 bis 4,
**gekennzeichnet durch**
eine Profilierung in der Polsterung (28) oder eine Luftverteilermatte (29) als Luftverteilerelement.

6. Fahrzeugsitz nach einem der Ansprüche 1 bis 5,
**dadurch gekennzeichnet,**
**dass** der Strömungskanal (5) zumindest eine Auflagekontur (10) zur Polsterung (28) hin aufweist und zur Polsterung (28) hin offen ist.

7. Fahrzeugsitz nach einem der Ansprüche 1 bis 6,
**dadurch gekennzeichnet,**
**dass** im Strömungskanal (5) ein Peltierelement (16) zum Heizen oder zum Kühlen der Anströmluft vorgesehen ist.

8. Fahrzeugsitz nach Anspruch 7,
**gekennzeichnet durch**
eine in die Sitzwanne (1) und / oder in die Rückenlehne eingeformte Aufnahmekontur (27) für das Peltierelement (16).

9. Fahrzeugsitz nach Anspruch 7 oder 8,
**gekennzeichnet durch**
zwei das Peltierelement (16) einfassende gegenüberliegende Abschlussplatten (18, 19),
• wobei die erste Abschlussplatte (18) eine Wandung des Strömungskanals (5) und
• wobei die zweite Abschlussplatte (19) eine Wandung eines zweiten mit dem Lüfter (11) verbundenen Strömungskanals (21) bildet.

10. Fahrzeugsitz nach Anspruch 9,
**gekennzeichnet durch**
• die Seitenwände (22) des zweiten Strömungskanals (21) bildende Einformungen in der Sitzwanne (1) und / oder in der Rückenlehne und
• einen den zweiten Strömungskanal (21) abschließenden Gehäusedeckel (23).
